(19) **Europäisches Patentamt / European Patent Office / Office européen des brevets**

(11) **EP 2 579 214 A1**

(12) **EUROPEAN PATENT APPLICATION**
published in accordance with Art. 153(4) EPC

(43) Date of publication:
**10.04.2013 Bulletin 2013/15**

(21) Application number: **11789092.1**

(22) Date of filing: **29.03.2011**

(51) Int Cl.:
*G06T 13/00* (2011.01)　　*H04L 12/58* (2006.01)

(86) International application number:
**PCT/CN2011/072257**

(87) International publication number:
**WO 2011/150713 (08.12.2011 Gazette 2011/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.06.2010　CN 201010191031**

(71) Applicant: **Tencent Technology (Shenzhen) Company Limited**
**Shenzhen**
**Guangdon 518044 (CN)**

(72) Inventors:
- **XIE, Weiwen**
  **Guangdong 518044 (CN)**
- **CHEN, Bin**
  **Guangdong 518044 (CN)**
- **GAO, Shundong**
  **Guangdong 518044 (CN)**

(74) Representative: **Gunzelmann, Rainer**
**Wuesthoff & Wuesthoff**
**Patent- und Rechtsanwälte**
**Schweigerstraße 2**
**D-81541 München (DE)**

(54) **METHOD, DEVICE FOR PLAYING ANIMATION AND METHOD AND SYSTEM FOR DISPLAYING ANIMATION BACKGROUND**

(57)　Embodiments of the present invention provide a method and device for playing an animation, belonging to a communication technology field. The method includes obtaining a first attribute value of an animation object of the current moment when an audio signal is detected, and determining a second attribute value and a first speed value corresponding to the audio signal; taking the first attribute value and second attribute value respectively as a starting point and end point, and playing the animation object according to the first speed value; and stopping, when the audio signal stops, playing the animation object if the playing of the animation object does not end. The device includes an audio starting animation playing module and an audio ending animation playing module. In embodiments, the playing of the animation is achieved through detecting the audio signal and playing the animation object combing the audio signal, which achieves the effect of the animation and enriches the displaying effect.

When an audio signal is detected, a first attribute value of an animation object of the current moment is obtained, and a second attribute value and a first speed value corresponding to the audio signal are determined — 101

The first attribute value and second attribute value are respectively taken as a starting point and end point, and the animation object is played according to the first speed value — 102

When the audio signal stops, if the playing of the animation object does not end, the playing is stopped — 103

Fig. 1

## Description

This application claims the benefit of priority from Chinese Patent Application, No. 201010191031.1, entitled "Method and Device for Playing Animation" and filed on June 2, 2010, the entire contents of which are hereby incorporated by reference.

### Field of the Invention

The present invention relates to a communication technology field, more particularly, to a method and device for playing an animation and a method and system for displaying an animation background.

### Background of the Invention

Along with the development of the Instant Messenger (IM) tools, the IM tools have been accepted by most of network users today, become indispensable software tools of the users. The IM tools are not only used in daily leisure and entertainment, but also widely used in users' work. Therefore, users have put forward relatively high requirements for the ease of use, stability and security, etc. of the IM software.

When playing audio signals with the existing devices, such as the DVD and Media Player, columnar spectrum changes with the audio signals. However, in the process of the above display, only the columnar spectrum changes with the audio signals. The convention method doses not disclose the technical scheme of playing the animation in combination of the audio signals. Furthermore, the existing IM software provides the users with personalized functions, such as changing skin and background pictures. However, the existing windows usually use pure colors, gradient or background pictures, etc. Such as, IM software usually uses the pure colors, gradient or background pictures when displaying the background of the main panel. Since the animation is not used, the effect of the displaying is monotonous and the displaying is in lack of user interactions.

### Summary of the Invention

For implementing the playing of the animation, embodiments of the present invention provide a method and device for playing an animation. The technical schema is as follows.

A method for playing an animation includes:

obtaining a first attribute value of an animation object of the current moment when an audio signal is detected, and determining a second attribute value and a first speed value corresponding to the audio signal;

taking the first attribute value and second attribute value respectively as a starting point and end point, and playing the animation object according to the first speed value; and

stopping, when the audio signal stops, playing the animation object if the playing of the animation object does not end.

A device for playing an animation includes:

an audio starting animation playing module, configured to obtain a first attribute value corresponding to an animation object of the current moment when an audio signal is detected, determine a second attribute value and first speed value corresponding the audio signal, take the first attribute value and second attribute value respectively as a starting point and a end point, and play the animation object according to the first speed value; and

an audio ending animation playing module, configured to stop, when the audio signal stops, playing the animation object if the playing of the animation object does not end.

A method for displaying an animation background includes:

constructing an animation layer and an application layer, configuring an attribute of the application layer as a transparent attribute, and configuring a transparent value of the application layer;

overlaying the animation layer and application layer, displaying the overlaid animation layer and application layer on a window;

obtaining a first attribute value of an animation object of the current moment when an audio signal is detected, and determining a second attribute value and a first speed value corresponding to the audio signal;

taking the first attribute value and second attribute value respectively as a starting point and end point, and playing the animation object on the animation layer according to the first speed value; and

stopping, when the audio signal stops, playing the animation object if the playing of the animation does not end.

A system for displaying an animation background includes:

a constructing device, configured to construct an animation layer and a application layer, configure an attribute of the application layer as a transparent attribute, and configure a transparent value of the application layer;

an overlaying and displaying device, configured to overlay the animation layer and application layer constructed by the constructing device, and display the overlaid animation layer and application layer on a window; and

an animation playing device, configured obtain, when an audio signal is detected, a first attribute value of an animation object of the current moment, determine a second attribute value and first speed value corresponding the audio signal, take the first attribute value and second attribute value respectively as a starting point and a end point, and play the animation object on the animation layer according to the first speed value, and stop, when the audio signal stops, playing the animation object if the playing of the animation object does not end.

In the above technical scheme provided by embodiments of the present invention, the playing of the animation is implemented through detecting the audio signal and playing the animation object combing the audio signal. Therefore, the effect of the animation is achieved and the displaying effect is enriched. The animation effect changes when the audio signal changes under the control of the user, which strengthens the interactions between the IM software and the user.

## Brief Description of Drawings

To make the technical solution of the embodiments of the present invention or prior art more apparent, brief introduction is given to drawings that are to be used in embodiments or prior art. It is apparent that the drawings described hereafter are merely some embodiments of the present invention. An ordinary skilled in the art may obtain other drawings according to these drawings without creative work.

Figure 1 is a flow chart of a method for playing an animation in accordance with embodiment 1 of the present invention;

Figure 2 is a flow chart illustrating a method for playing an animation in accordance with embodiment 2 of the present invention;

Figure 3 is a schematic diagram illustrating a device for playing an animation in accordance with embodiment 3 of the present invention;

Figure 4 is another schematic diagram illustrating a device for displaying an animation in accordance with embodiment 3 of the present invention;

Figure 5 is a schematic diagram illustrating a relationship between a speed value and an attribute value in accordance with an embodiment of the present invention;

Figure 6 is flow chart illustrating a method for displaying an animation background in accordance with embodiment 4 of the present invention; and

Figure 7 is a schematic diagram of a system for displaying an animation background in accordance with embodiment 5 of the present invention.

## Detailed Description of the Invention

The embodiments of the present invention are further described hereinafter in detail with reference to the accompanying drawings to make the objective, technical solution and merits thereof more apparent.

Embodiment 1

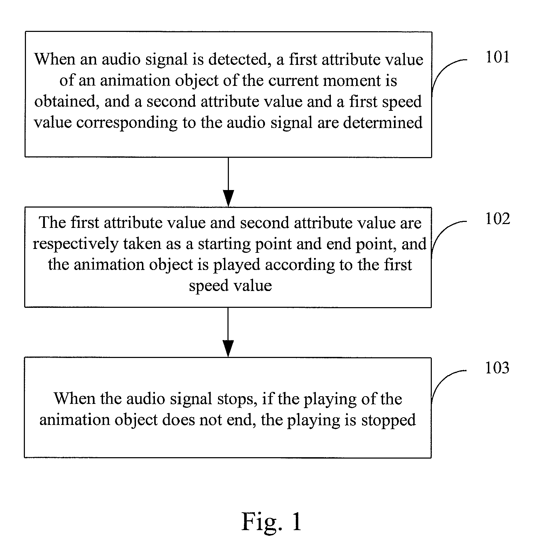

Refer to figure 1, an embodiment of the present invention provides a method for playing an animation, including the following blocks.

Block 101: When an audio signal is detected, a first attribute value of a current animation object is obtained, and a second attribute value and a first speed value corresponding to the audio signal are determined.

Block 102: The first attribute value and second attribute value are respectively taken as a starting point and end point, and the animation object is played according to the first speed value.

Block 103: When the audio signal stops, but the playing of the animation object does not end, the playing is stopped.

The animation object mentioned in this embodiment refers to a unit of the played animation. The unit takes many forms, such as may be a picture. For instance, the playing of the animation includes loading the picture, changing the location and color of the picture, and scaling the size of the picture with an Image control. The playing of the animation includes describing paths, i.e., forming a period of closed or open curve with straight lines and/or curves, drawing out Paths with straight lines and curves which are connected with each other, and filling a shape constituted with the Paths with different colors. Certainly, the animation object may take other forms. This embodiment of the present invention does not make limitations on this.

The playing of the animation object in this embodiment refers to transforming, according to the attribute value, the animation object between a starting point and end point at a fixed speed. The transform refers to the change from the attribute value of the starting point to the attribute value of the end point taking the time as a horizontal axis and taking the attribute value as the vertical axis. The time of the transform reflects the speed of the playing of the animation. In addition, as for any type of attribute value, the transform may be a linear transform, a sine transform or a parabolic transform, etc. Certainly, the transform may take other forms. This embodiment of the present invention does not make limitation on this.

An example is given hereafter for describing the above three types of transforms. Specifically, the above transforms are expressed with the following formulas. T0 denotes starting time of the animation corresponding to the starting point. TM denotes ending time of the animation corresponding to the end point. V0 denotes an attribute value of the animation corresponding to the starting point. VM denotes an attribute of the animation corresponding to the end point. Letter t denotes some time between T0 and TM. Letter v denotes an attribute value of the animation corresponding to t point. The attribute value v corresponding to a time point t may be obtained through the following transform formulas.

1) The linear transform formula:

$$v = (VM-V0) / (TM-T0) \times (t-T0) +V0;$$

2) The sine transform formula:

$$v = (VM-V0) \times Sin\ (\pi/2 \times (t-T0)/(TM-T0)) + V0;$$

3) The parabolic transform formula:

$$v = (t-T0) \times (t-T0) \times (VM-V0)/((TM-T0) \times (TM-T0))+V0.$$

In this embodiment, before the audio signal is detected, the animation object may be in a stationary state, or in a playing state. When the animation object is in the playing state, the method may specifically include the following processing.

The preset third attribute value and fourth attribute value are respectively taken as the starting point and end point. The animation object is played in a continuous loop according to the second speed value. Correspondingly, when the audio signal is detected, the method further includes stopping the loop playback. When the audio signal stops, the method further includes continuing with the loop playback.

The loop playback in this embodiment refers to that the animation object is not played once between the starting point and end point, but repeatedly played between the starting point and the end point. The contents played each time are the same. The same contents are just played for multiple times, and the follow-up playback just simply repeat the contents played for the first time. The playing in embodiment 102 refers to a one-time playing made along with generation of the audio signal, and is not repeated. The playing ends when the playing is finished, or when the audio signal stops.

In this embodiment, when the audio signal stops, the animation object returns back to the initial state. If the initial state is a stationary state, the animation object returns back to the stationary state. If the initial state is a playing state, the animation object returns back to the initial playing state.

In this embodiment, the attribute values of the animation object refer to parameters which may reflect characteristics of the animation object, and may be expressed in many forms. This embodiment of the present invention does not make limitation on this. Any attribute value of the animation object may be at least one of a rotation angle, translation distance, size and color. The color may be a fill color, line color or font color, etc. When the attribute value of the animation object is the size of the animation object, the animation object may be expressed with two methods. The first one is that the animation object is expressed with the scaling of the animation object. For instance, the proportion 110% denotes that the animation object is enlarged, and proportion 90% denotes that the animation object is shrunk. The other one is that the animation object is expressed with the length and width of the animation object, or each coordinate value of each vertex of the animation object. In this case, a value denoting the size of the animation object is generally converted into the scaling first, and then the animation is played with the existing scaling method.

An example is given hereafter for describing that the attribute value of the animation object may be a value or a combination of multiple values. For instance, the animation object is a picture of a bamboo, and the attribute value includes one of the rotation angle and translation distance of the bamboo, or includes the both, etc. For another example, the animation object is a circle made up of paths. The attribute value includes one of the fill color of the circle and the translation distance of the circle, or includes the both, etc. This embodiment may include one or multiple circles, and the present invention does not make limitations on this.

The speed value of the animation object in this embodiment refers to time used for changing the attribute value of the animation object from the attribute value of the starting point to that of the end point. Therefore, the speed value may be expressed with the time. For instance, the angle of starting point of the bamboo is 0°, and the angle of the end point of the bamboo is 5°. The time used for changing the angle of the bamboo from 0° to 5° is 2500ms, and the corresponding speed value is 2500ms.

The audio signal in this embodiment refers to the audio signal output by the system. The audio signal may be the audio signal which is sent out by a user with a microphone and output by the system, or may be the audio signal generated by the system. For instance, the audio signal may be generated by playing music with a player, etc. Certainly, the audio signal may be in other forms, and the present invention does not make limitations on this. The audio signal may be detected with existing methods. Therefore, the detail description of theses methods are omitted in this embodiment of the present invention.

In this embodiment, a corresponding relationship between the audio signal and both the attribute value and speed value is preset. The second attribute value and first speed value corresponding to the audio signal is determined in block 101, and the second attribute value and first speed value corresponding to the audio signal may be found according to the corresponding relationship.

The above method provided by this embodiment applies to a terminal device. The terminal device may be a client terminal device, such as a computer, a laptop computer and a pocket PC, etc. This embodiment of the present invention does not make limitations on this. The animation object in this embodiment may be an animation object in any application software. This embodiment of the present invention does not make limitations on this. The animation object generally refers to an animation object in the background of the main plane of the application software. For instance, the animation object is an animation object in the background of the main plane of the IM software. As for any application software, the background may include one or multiple animation objects. Generally, multiple animation objects are included, and this embodiment of the present invention does not make limitations on this. For instance, the background of the main plane of the IM software is a bamboo picture. The bamboo picture includes five bamboos. Each bamboo is an animation object, and this bamboo picture includes five animation objects. The above terminal device further provides the user with a button, with which the user decides whether to change the background, and selects a specific background, etc. For instance, the terminal device provides a brush button, after the user clicks the brush button a toolbar used for selecting the background is displayed, and the toolbar provides multiple icons. After the user clicks an icon or the when the mouse is moved over the icon, the background is switched and displayed according to the background corresponding to the icon. Detailed description is omitted here.

In the above method provided by this embodiment of the present invention, the animation object is played by detecting audio signal and combing the audio signal, by which the playing of the animation is implemented, the animation effect is achieved, and the displaying effects are enriched. In addition, the displaying effect of the animation may be controlled and the interactions between the user and the IM software are enhanced through the audio signal.

It is worth mentioning that all embodiments in the present invention are described taking one animation object for example. When multiple animation objects need to be played at the same time, any of the animation objects may be played according to the procedure of this embodiment. The processes for playing different animation objects are the same, and the difference is that the animation objects are different. Therefore, detailed descriptions of the processes for playing multiple animation objects are omitted in this embodiment.

Embodiment 2

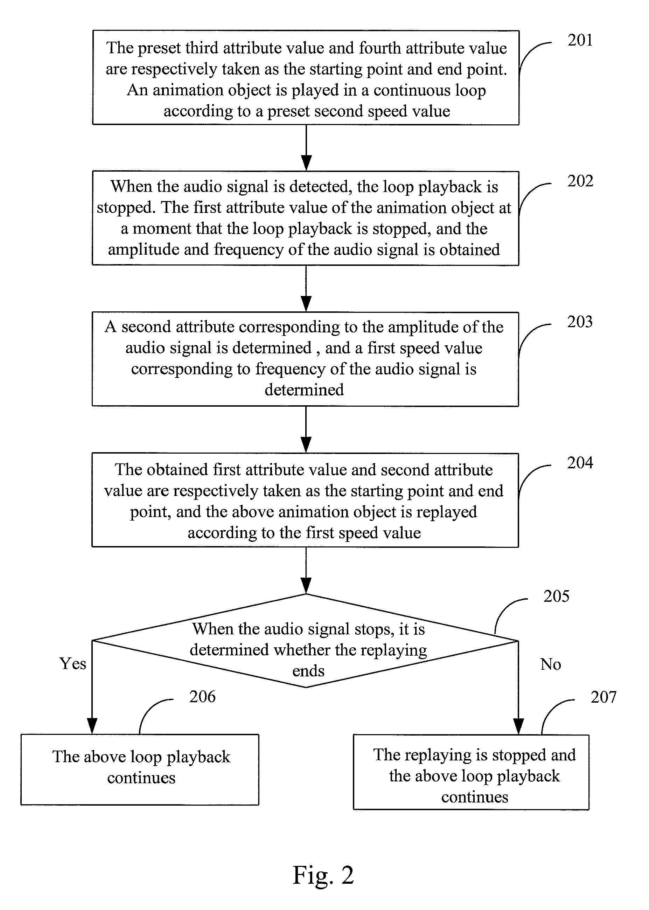

Refer to figure 2, this embodiment provides a method for playing an animation. The description is given hereafter taking the initial state of the animation object as the playing state for example. The method includes:

Block 201: The preset third attribute value and fourth attribute value are respectively taken as the starting point and end point. An animation object is played in a continuous loop according to a preset second speed value.

The preset third attribute value and fourth value are initial attribute values, and the animation object is played in the continuous loop according to the initial attribute values. For instance, as shown in table 1, the animation object is a bamboo picture, and the preset initial starting point and end point of the animation are respectively angle 0 ° and 5° .

Table 1

| Time (the unit is ms) | Angle (the unit is degree) |
|---|---|
| 0 (initialization) | 0 |
| 2500 | 5 |
| 5000 | 0 |

The value of the time in table 1 is the speed value of the animation object, and the angle is the attribute value of the animation object. After the bamboo picture is played according to the settings of table 1, the bamboos swing between an angle of 0° and 5° , and a period of the animation is 5000ms, which shows, in the visual, an animation effect that the bamboos swing in the wind.

Specifically, the rotated animation may be implemented with an existing Rotate Transform method. The Rotate Transform method may rotate the object in a clockwise or counterclockwise direction around a preset designation point in a two-dimensional coordinate system. In the method, the parameter input is a two-dimensional rotation angle. Generally, the positive value of the angle represents the clockwise rotation, and the negative value of the angle represents the counterclockwise. The other animations may also be implemented with the existing methods. For instance, the scaled animation may be implemented with the Scale Transform method. The object is scaled in the two-dimensional coordinate system and the parameter input is the scaling. Alternatively, the translated animation is implemented with a Translate Transform method. The object is translated in the two-dimensional coordinate system, and the parameter input is the translation distance, etc. Detailed descriptions are omitted in this embodiment of the present invention.

Block 202: When the audio signal is detected, the loop playback is stopped. The first attribute value of the animation object at a moment that the loop playback is stopped, and the amplitude and frequency of the audio signal is obtained.

In this embodiment, the amplitude of the audio signal represents volume, i.e. the loudness of the voice, the unit of which is decibel. The greater amplitude represents the greater the volume, while the smaller amplitude represents the smaller the volume. The frequency of the audio signal represents tone, i.e. the level of the voice, the unit of which is Hz. The greater frequency represents the higher tone, while the smaller frequency represents the lower tone. Generally, the frequency range of human hearing is 20~ 20000Hz.

Block 203: A second attribute corresponding to the amplitude of the audio signal is determined according a corresponding relationship between preset amplitude and an attribute value, and a first speed value corresponding to frequency of the audio signal is determined according to a preset relationship between preset frequency and a speed value.

In this embodiment, the corresponding relationship between the preset amplitude and the attribute value may be that an amplitude value corresponds to an attribute value. Preferably, each amplitude scope corresponds to an attribute value. Specifically, the amplitude may be divided into multiple sections, and each section corresponds to a specific attribute value. For instance, the amplitude is divided into 0-20 db, 20-50 db and 50-70 db, which respectively correspond to 0° , 5° and 10° . Similarly, the corresponding relationship between the preset frequency and the speed value may be that a frequency value corresponds to a speed value, or a frequency scope corresponds to a speed value. Specifically, the frequency may be divided into multiple sections, and each section corresponds to a speed value. For instance, the frequency is divided into 20~100Hz, 100~500Hz and 500~800Hz, the speed values corresponding to 20~100Hz, 100~500Hz and 500~800Hz are respectively 2500ms, 5000ms and 7000ms. In addition, the preset corresponding relationship between the amplitude and attribute value and preset corresponding relationship between the frequency and speed value are stored in a database, for the convenience of inquiry.

Block 204: The obtained first attribute value and second attribute value are respectively taken as the starting point and end point, and the above animation object is replayed according to the first speed value.

Generally, the audio signal may be controlled by the user. The attributes of the animation object change as the audio signal changes. The user may control the displaying effect of the animation through control the audio signal. For instance, in the bamboo animation, the larger the amplitude of the audio signal, the larger the swing amplitude of leaves, while the smaller the amplitude of the audio signal, the smaller the swing amplitude of the leaves. The higher the frequency of the audio signal, the faster the swing speed of the leaves, while the lower the frequency of the audio signal, the slower the swing speed of the leaves.

In this embodiment, when the current played animation stops, the attribute value corresponding to the animation object of this moment does not return to the initial value, i.e. the value of the moment that the animation starts, while the attribute value keeps the current value. For instance, in 1000ms, the angle changes from 0° to 1 ° in a linear transform mode. If the animation stops at 700ms, the value of the animation object is the current value, i.e., angle 0.7° , but not the initial value, i.e. angle 0° .

This embodiment is described hereafter taking the description in table 1 for example. When the audio signal is detected, the current loop playback is stopped, and the it is obtained that the first attribute value of the animation object of the moment that the animation object is stopped is angel 2° . In addition, it is determined that the second attribute value corresponding to the amplitude of the audio signal is angle 10° . The first speed value corresponding to the frequency is 2000ms. The animation object is replayed according to table 2.

Table 2

| Time (the unit is ms) | Angle (the unit is degree) |
| --- | --- |
| 0 (initialization) | 2 (the value of the last time) |
| 2000 | 10 |

Angle 2° is the attribute value, i.e., the first attribute value of the animation at the moment that the last playing of the animation is stopped. The first attribute value is taken as the attribute value of the starting point of this playing. Angle 10° is an attribute value of the end point of this playing which is determined according to the audio signal. The speed value 2000ms is the time needed for changing the animation object from angle 2° to angle 10° . The playing corresponding to table 2 is one-time playing. The visual expression of the playing is that under the influence of the sound, the swing angle of the leaves has been rising, and the leaves flutter up to a certain angle.

Block 205: When the audio signal stops, it is determined whether the replaying ends. If the replaying ends, block 206 is executed; otherwise block 207 is executed.

Block 206: The above loop playback continues, and the process is terminated.

Block 207: The replaying is stopped and the above loop playback continues, and the process is terminated.

The continuing of the above loop playback in blocks 206 and 207 refers to making the animation return to the initial position, and going on with the loop playback in block 201.

In this embodiment, after block 204, the method further includes:

Before the audio signal stops, if the audio signal changes, the current playing of the animation object is stopped. The fifth attribute value of the animation object of the moment that the audio signal is changed, and the sixth attribute value and third speed value of the animation object corresponding to the changed audio signal are determined. The fifth attribute value and sixth attribute value are respectively taken as the starting point and end point. The animation object is played according to the third speed value. The playing is the one-time playing, and the playing stops when the playing is finished.

In this embodiment, before the audio signal stops, the situation that the audio signal changes for many times may occur. At this moment, the playing process after the audio signal is changed may be repeated for many times. That is, each time the audio signal is changed, the process of playing is performed. The principle of each playing is the same. While the related two attribute values and a speed value may be different, and the description of this is omitted.

In this embodiment, the audio signal is periodically detected. A time value may be preset as a detection period. When the detection period expires, it is detected whether the audio signal exists or is changed. For instance, the preset period is 50ms, the audio signal is detected every 50ms. If it is detected that compared with the last detected audio signal, the detected audio signal of the current moment is changed, and the one-time animation playing is performed according to the changed audio signal. The time value of the detection period may be configured or modified as required. For instance, the time value of the detection period may be configured as 60ms or 100ms, etc. This embodiment of the present invention does not make limitations on this.

For instance, after the playing of the animation shown in table 2 starts, after 1500ms, the angle is changed to 8° . Now, it is detected that compared with the last detected audio signal, the audio signal which is detected at the moment is changed. The corresponding angle is 15° , and the speed value is 1000ms. The playing of the animation shown in table 2 is stopped, and the animation is played according to the parameters in table 3.

Table 3

| Time (the unit is ms) | Angle (the unit is degree) |
|---|---|
| 0 (initialization) | 8 (the value of the last time) |
| 1000 | 15 |

The angle 8° is the attribute value of the moment that the last playing of the animation is stopped, i.e., the fifth attribute value and is taken as the attribute value of the starting point of this playing. The angle 15° is the attribute value of the end point of this playing which is determined according to the audio signal, i.e., the sixth attribute value. The speed value 1000ms i.e., the third speed value, is the time value used for changing the animation object from angle 8° to angle 15° . The playing corresponding to table 3 is one-time playing. The visual expression is that the swing angle of the leaves keeps on rising under the influence of the sound, and the leaves flutter up to another angle.

In this embodiment, after block 204, the method further includes:

If the current playing of the audio signal stops, and the audio signal is not stopped, it is determined whether, compared with the audio signal of the moment that the current playing is stopped, the audio signal is changed. If the audio signal is not changed, the seventh attribute value of the animation object of the ending moment is obtained, and the eighth attribute value is determined according to the seventh attribute value and the preset adjusted value. The seventh attribute value and eighth attribute are respectively taken as the starting point and end point. The animation object is played in a continuous loop according to the preset fourth speed value, until the audio signal is changed or stopped. The preset adjusted value refers to the adjusted value of the attribute of the animation object. The adjusted value may be an incremental adjusted value, for instance, +3, or a decrement adjusted value, such as -3, etc. The specific value of the adjusted value may be any value. In addition, the adjusted value may be modified at any time as required. This embodiment of the present invention does not make limitations on this. The eighth attribute value is obtained by adding the adjusted value to the seventh attribute value.

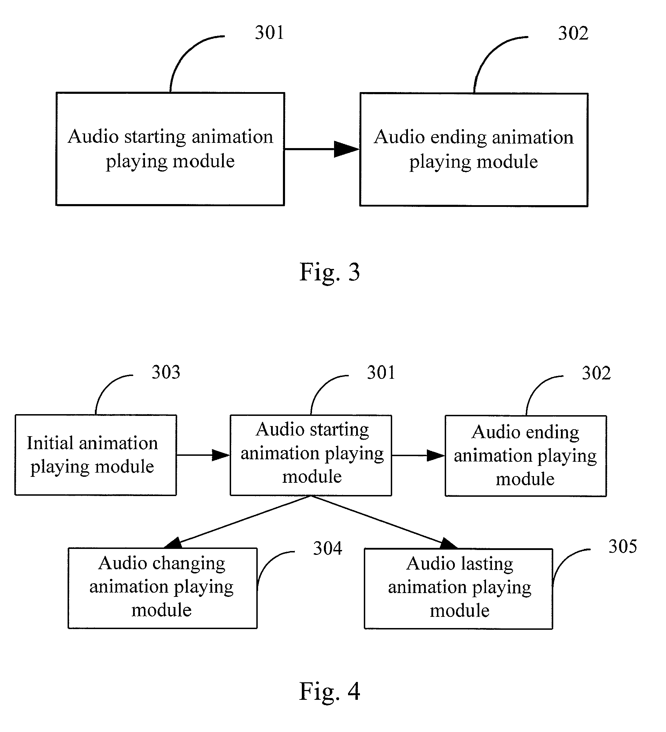

For instance, after the playing of the animation shown in figure 3 starts, after 1000ms, the playing of the animation shown in figure 3 is stopped. However, the audio signal is not stopped and changed, and both the amplitude and frequency thereof are not changed. The seventh attribute value of the animation object at that moment that the playing of the animation shown in figure 3 is stopped is angle 15° . If the preset adjusted value is +2, the eighth attribute value obtained by adding the adjusted value to the seventh attribute value is angle 17° . The animation is played in a continuous loop according to parameters in figure 4.

Table 4

| Time (the unit is ms) | Angle (the unit is degree) |
|---|---|
| 0 (initiation) | 15 (the value of the last time) |
| 5 | 17 (the value of the last time plus 2) |
| 10 | 15 (the value of the last time minus 2) |

Angle 15 is the attribute value of the moment that the playing of the animation shown in figure 3 is stopped, and is taken as the attribute value of the starting point of this playing of the animation. Angle 17° is the attribute value of the end point of the this playing of the animation. The preset fourth speed value is 5ms, and 5ms is used for changing the animation object from angle 15 to angle 17° . The changing period is 10ms, and 5ms is used for changing the animation from the starting point to the end point and another 5ms is used for changing the animation from the end point to the starting point. After the animation is played in a continuous loop according to table 4, the leaves swing to and fro in a certain angle, and the visual expression is trembling, such as the trembling of the leaves of the bamboos when the leaves of the bamboos are blew to a limit state. With the process from table 1 to table 4, the bamboos swing to the maximum amplitude under the influence of the sound. At this moment, since the same amplitude and frequency are kept, the visual express is that the leaves are trembling. The trembling state lasts unit the audio signal is changed or stopped.

In this embodiment, when the audio signal stops, both the amplitude and frequency of the frequency signal changes to 0. The animation object returns to the initial position, and the loop playback in block 201 is performed. For instance, when the playing of the animation of table 4 is stopped, the audio signal stops at a moment. Then, the playing of the animation may be performed according to table 5.

Table 5

| Time (the unit is ms) | Angle (the unit is degree) |
| --- | --- |
| 0 (initialization) | The value of the last time |
| 2500 | 0 |

The value of the last time shown in table 5 is the attribute value corresponding to the moment that the playing of the animation shown in table 4 is finished. The angle 0° is the attribute value of the moment that the animation returns to the initial position. The animation is played according to the parameters in table 5. The visual expression is that the audio signal stops, and the bamboos return to the initial position. The corresponding speed value may be preset, such as 2500ms in table 5.

The transform between any pair of starting point and end point of the animation object in this embodiment may be the linear transform, sine transform or parabolic transform. The specific transform is identical with that described in embodiment 1, and the detailed descriptions are omitted here. Any attribute value of the animation object in this embodiment may be at least one of the rotation angle, translation distance, size and color. The specific attribute value is identical with that in embodiment 1, and detailed descriptions are omitted here.

This embodiment is described taking the attribute value as the angle for example. The process of the method is similar to the above method when the attribute value is any other value, such as the color, translation distance, etc. The differences are that the angle is replaced with any other attribute value. The other contents are the same, and the whole process is unchanged. Therefore, detailed descriptions are omitted here.

The above method in this embodiment is described taking an example that the initial state of the animation object is the loop playback state. When initial state of the animation object is the stationary state, the above method is also applicable. The differences are that at the initial stage, the loop playback state is replaced with the stationary state, and the animation object returns to the initial state, i.e. the stationary state. The other processes are the same. Therefore, detailed descriptions are omitted here.

In the above method provided by this embodiment of the present invention, the playing of the animation is implemented through detecting the audio signal and playing the animation object combing the audio signal. Therefore, the playing of the animation is implemented, the effect of the animation is achieved and the displaying effect is enriched. In addition, the audio signal may be controlled by the user. The animation object changes as the audio signal changes. The displaying effect of the animation is controlled through controlling the audio signal by the user, and the interactions are implemented, which greatly enhances the experiences of the user, and meets the personalized requirements of the user. For instance, the user makes a sound with a microphone. Accordingly, the animation effect relating to the sound may be seen from the playing of the animation, which enhances the interactions between the IM software and the user.

Embodiment 3

Refer to figure 3, an embodiment of the present invention provides a device for playing an animation, including: audio starting animation playing module 301 and audio ending animation playing module 302.

The audio starting animation playing module 301 is configured to obtain the first attribute of an animation object of the current moment when the audio signal is detected, and determine the second attribute and first speed value corresponding to the audio signal. The first attribute value and second attribute value are respectively taken as the starting point and end point, and the animation object is played according to the first speed value.

The audio ending animation playing module 302 is configured to stop the playing if the audio signal stops and the above playing does not end.

In this embodiment, the above device may further include: an initial animation playing module 303. The initial animation playing module 303 is configured to respectively take the preset third attribute value and fourth attribute value as the starting point and end point, and play the animation object in a continuous loop according to the second speed value. Accordingly, the audio starting animation playing module 301 is further configured to control the initial animation playing module 303 to stop the loop playback when the audio signal is detected, and control the initial animation playing module 303 to continue with the loop playback when the audio signal stops.

Certainly, before the audio signal id detected in this embodiment, the animation object may be a stationary station, which is identical with the descriptions of the method in the above embodiment, and is not repeated here.

In this embodiment, the audio starting animation playing module 301 may further include a determination unit, configured to obtain the amplitude and frequency of the audio signal. The second attribute value corresponding to the amplitude of the audio signal is determined according to the preset corresponding relationships between the amplitude and attribute values. In addition, the first speed value corresponding to the frequency of the audio signal is determined according to the present relationships between the frequencies and speed values.

Refer to figure 4, in this embodiment; the above apparatus may further include an audio changing animation playing module 304. The audio changing animation playing module 304 is configured to stop, if the audio signal is changed, the current playing of the animation object before the audio signal stops, obtain the fifth attribute value of the animation object of the moment that the audio signal is changed, determine the corresponding sixth attribute value and third speed value after the audio signal is changed, respectively take the fifth attribute value and sixth attribute value as the starting point and end point, and play the animation object according to the third speed value.

In this embodiment, the above apparatus may further include: an audio lasting animation playing module 305. The audio lasting animation playing module 305 is configured to determine, if the current playing of the animation object is stopped and the audio signal does not stop, whether the audio signal, compared with the audio signal of the moment that the playing is stopped, changes after the audio starting animation playing module 302 replays the animation object according to the second speed value, obtain the seventh attribute value of the animation object of the moment that the playing is stopped if the audio signal is not changed, respectively take the seventh attribute value and eighth attribute value as the starting point and end point, and play the animation object in a continuous loop according to the fourth speed value until the audio signal is changed or stopped.

In this embodiment, the transform between any pair of starting point and end point of the animation object in this embodiment may be the linear transform, sine transform or parabolic transform. Any attribute value of the animation object in this embodiment may be at least one of the rotation angle, translation distance, size and color. The specific attribute value is identical with that in embodiment 1, and detailed descriptions are omitted here.

The above device provided by this embodiment may be a terminal device. The idea of the device embodiment is identical with that of the method embodiment. This device may execute any method in the above method embodiments. Refer to the descriptions in the above method embodiments for the specific process of the device embodiment, which is not repeated here.

In the above device provided by this embodiment of the present invention, the playing of the animation is implemented through detecting the audio signal and playing the animation object combing the audio signal. Therefore, the playing of the animation is implemented, the effect of the animation is achieved and the displaying effect is enriched. In addition, the audio signal may be controlled by the user. The animation object changes as the audio signal changes. The displaying effect of the animation is controlled through controlling the audio signal by the user, and the interactions are implemented, which greatly enhances the experiences of the user, and meets the personalized requirements of the user. For instance, the user makes a sound with a microphone. Accordingly, the animation effect relating to the sound may be seen from the playing of the animation, which enhances the interactions between the IM software and the user.

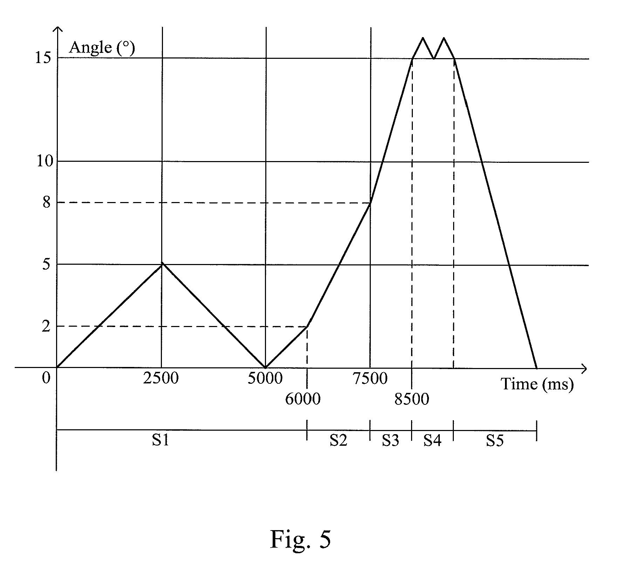

Taking the bamboo animation in figure 2 for example, the changing process as shown in table 1 to table 5 is described hereafter with reference to accompanying figures. Refer to figure 5, figure 5 is a chart illustrating the relationship between the speed value and attribute value in the process that the bamboo animation is played according to tables 1 to 5 in embodiment 2. The horizontal axis represents the speed value denoted with time, the unit of which is ms. The vertical axis represents the attribute value, denoted with the angle, the unit of which is degree. S1 in the figure denotes that the initial loop playback is performed according to table 1. The leaves swing in the wind, and the corresponding time period is 0~6000ms. S2 represents that the playing is performed according to table 2 after the audio signal is detected, and the leaves flutter up to a certain angle under the influence of the sound. The corresponding time period is 6000ms~7500ms, and the angle changes from 2° to 8° . S3 represents that the audio signal after being changed is played according to table 3, and the leaves keep on fluttering up. The corresponding time period is 7500ms~8500ms, and the angle changes from 8° to 15° . S4 represents that the loop playback is performed according to table 4 when the current playing of the animation is stopped but the audio signal still continues and is unchanged, and the leaves flutter to the highest point and tremble in the wind. Then, the audio signal stops at a moment, the animation is played according to table 5. What is shown in the figure is S5, and the loop playback (now shown in the figure) is performed according to table 1. It can be seen from the relationship chart that the playing of the animation changes under the influence of the audio signal, which greatly enhances the effects of the animation. In addition, the user may alter the effects of the animation by controlling the audio signal, which strengthens the interactions between the IM software and the user, and satisfies the personalized requirements of the user.

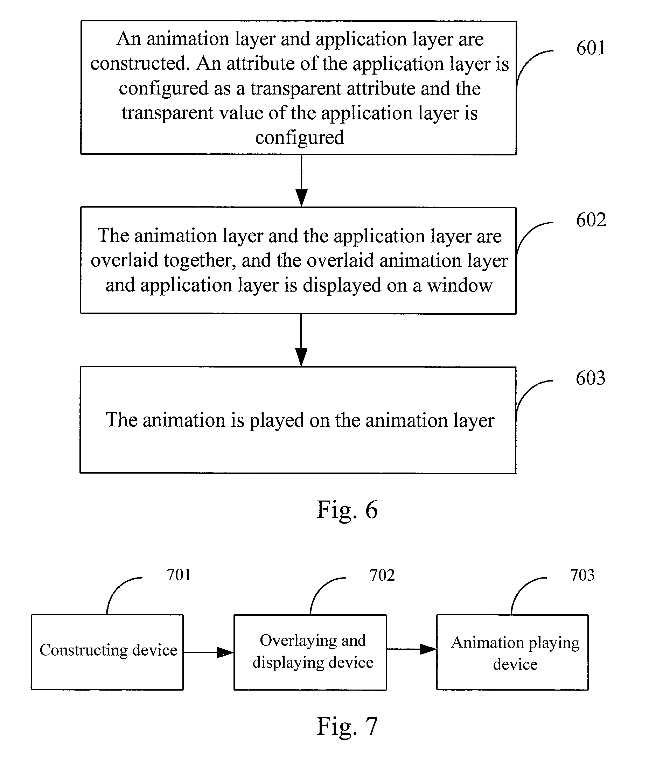

Refer to figure 6, which illustrates a method for displaying an animation background in accordance with embodiment 4 of the present invention. The method includes the following blocks.

Block 601: An animation layer and application layer are constructed. An attribute of the application layer is configured as a transparent attribute and the transparent value of the application layer is configured.

The animation layer and application layer are constructed with existing methods. The application layer is a layer other than the animation layer, and includes contents such as application controls and pictures. The transparent value may be configured as any value between zero and one hundred according to actual requirements. Zero represents completely transparent, and one hundred represents completely opaque.

Block 602: The animation layer and the application layer are overlaid together, and the overlaid animation layer and application layer is displayed on a window.

In actual application, a configuration may be made to make the size of the animation layer equal to that of the background of the application layer, and the position of the animation layer identical with that of the background of the application layer. In this embodiment of the present, the application layer may be overlaid by the animation layer or the animation layer is overlaid by the application layer.

Block 603: The animation is played on the animation layer.

In this embodiment of the present invention, the animation is played on the animation layer according to the above method for playing the animation as disclosed in the above embodiments. For the sake of brevity, the specific method for playing that animation is not repeated here. The above window may be a main plane or IM charting window, etc., in the IM software.

Refer to figure 7, figure 7 illustrate a system for displaying an animation background in accordance with embodiment 5 of the present invention. The system includes constructing device 701, overlaying and displaying device 702 and animation playing device 703.

The constructing device 701 is configured to construct an animation layer and an application layer. An attribute of the application layer is configured as a transparent attribute, and a transparent value of the application layer is configured.

The overlaying and displaying device is configured to overlay the animation layer and application layer constructed by the constructing device, and display the overlaid animation layer and application layer on the window.

The animation playing device is configured to play the animation on the animation layer. The specific scheme for playing the animation is identical with that used by the device for playing the animation in embodiment 3, and is not repeated here.

With the system and method for displaying the animation background provided by embodiments 4 and 5, the animation layer is constructed in a window, such as the main plain or chatting window of the IM software, and the animation object is played in the animation layer combing the audio signal. Therefore, the problem that the displaying effect is monotonous is solved, and the effects that the background displaying is enriched and the window is beautified are achieved.

At last, it should be noted that an ordinary skilled in the art may understand that all or part processes for implementing the above method embodiments may be implemented with related hardware instructed by computer programs. The programs may be stored in a computer-readable storage medium. When the programs are executed, the processes of the above method embodiments may be implemented. The storage medium may be a disk, Compact Disk (CD), Read-only Storage Memory (ROM) or Random Storage Memory (RAM), etc.

Each function unit in the embodiments of the present invention may be integrated into a processing module, or may be a separate physical unit. Alternatively, two or more than two function units are integrated into one module. The above integrated modules may be implemented with hardware, or software function modules. If implemented with the software function modules, sold and used as independent products, the integrated modules may be stored in a computer-readable storage medium. The above mentioned storage medium may be a ROM, disk or CD, etc. Each of the above devices and systems may execute the methods in the method embodiments.

The foregoing description only describes preferred embodiments of the present invention and is not used for limiting the protection scope thereof. Any modification, equivalent substitution, or improvement made without departing from the spirit and principle of the present invention should be covered by the protection scope of the present invention.

**Claims**

1. A method for playing an animation, comprising:

   obtaining a first attribute value of an animation object of the current moment when an audio signal is detected, and determining a second attribute value and a first speed value corresponding to the audio signal;
   taking the first attribute value and second attribute value respectively as a starting point and end point, and playing the animation object according to the first speed value; and
   stopping, when the audio signal stops, playing the animation object if the playing of the animation object does not end.

2. The method of claim 1, before detecting the audio signal, further comprising:

   taking a preset third attribute value and a fourth attribute value respectively as the starting point and end point, and playing the animation object in a continuous loop according to a preset second speed value; wherein when the audio signal is detected, the method further comprises: stopping the animation object in the continuous loop; and
when the audio signal stops, the method further comprises: continuing to playing the animation object in the continuous loop.

3. The method of claim 1, wherein determining the second attribute value and first speed value corresponding to the audio signal comprises:

obtaining amplitude and a frequency of the audio signal;
determining the second attribute value corresponding to the amplitude of the audio signal according to relationship between preset amplitude and attribute values, and determining the first speed value corresponding to the frequency of the audio signal according to a relationship between preset frequencies and speed values.

4. The method of claim 1, further comprising:

stopping, before the audio signal stops, the current playing of the animation object if the audio signal is changed, obtaining a fifth attribute value of the animation object of a moment that the audio signal is changed, and determining a sixth attribute value and third speed value corresponding the changed audio signal; and
taking the fifth attribute value and sixth attribute value respectively as the starting point and end point, and playing the animation object according to the third speed value.

5. The method of claim 1, after taking the first attribute value and second attribute value respectively as the starting point and end point, and playing the animation object according to the first speed value, further comprising:

determining whether the audio signal changes compared to the audio signal of a moment that the current playing is stopped if the currently playing of the animation object is stopped and the audio signal does not stop;
obtaining a seventh attribute value of the animation object of the moment that the current playing is stopped if the audio signal does not change, determining an eighth attribute value according to the seventh attribute value and a preset adjusted value, taking the seventh attribute value and eighth attribute value respectively as the starting point and end point, and playing the animation object in a continuous loop according to a preset fourth speed value unit the audio signal is changed or stopped.

6. A device for playing an animation, comprising:

an audio starting animation playing module, configured to obtain a first attribute value corresponding to an animation object of the current moment when an audio signal is detected, determine a second attribute value and first speed value corresponding the audio signal, take the first attribute value and second attribute value respectively as a starting point and a end point, and play the animation object according to the first speed value; and
an audio ending animation playing module, configured to stop, when the audio signal stops, playing the animation object if the playing of the animation object does not end.

7. The device of claim 6, further comprising:

an initial animation playing module, configured take a preset third attribute value and a fourth attribute value respectively as the starting point and end point, and playing the animation object in a continuous loop according to a preset second speed value; wherein
the audio starting animation playing module is further configured to control the initial animation playing module to stop playing the animation object in the continuous loop when the audio signal is detected, and control the initial animation playing module to continue to play the animation object in the continuous loop when the audio signal stops.

8. The device of claim 6, wherein the audio starting animation playing module further comprises:

a determination unit, configured to obtain amplitude and a frequency of the audio signal, determine the second attribute value corresponding to the amplitude of the audio signal according to a preset relationship between the amplitude and attribute values, and determine the first speed value corresponding to the frequency of the audio signal according to a preset relationship between frequencies and speed values.

**9.** The device of claim 6, further comprising:

an audio changing animation playing module, configured to stop, before the audio signal stops, the current playing of the animation object if the audio signal changes, obtain a fifth attribute of the animation object of a moment that the audio signal is changed, determine a sixth attribute value and third speed value corresponding to changed audio signal, take the fifth attribute value and sixth attribute value respectively as the starting point and end point, and play the animation object according to the third speed value.

**10.** The device of claim 6, further comprising:

an audio lasting animation playing module, configured to determine, after the audio starting animation playing module replays the animation object according to the second speed value, whether the audio signal changes compared with the audio signal of the moment that the current playing is stopped if the current playing of the animation object is stopped and the audio signal does not stop, obtain a seventh attribute value of the animation object of a moment that the playing is stopped, determine an eighth attribute value according to the seventh attribute value and a preset adjusted value, take the seventh attribute value and eighth attribute value respectively as the starting point and end point, play the animation object in a continuous loop according to a preset fourth speed value until the audio signal is changed and stopped.

**11.** A method for displaying an animation background, comprising:

constructing an animation layer and an application layer, configuring an attribute of the application layer as a transparent attribute, and configuring a transparent value of the application layer;
overlaying the animation layer and application layer, displaying the overlaid animation layer and application layer on a window;
obtaining a first attribute value of an animation object of the current moment when an audio signal is detected, and determining a second attribute value and a first speed value corresponding to the audio signal;
taking the first attribute value and second attribute value respectively as a starting point and end point, and playing the animation object on the animation layer according to the first speed value; and
stopping, when the audio signal stops, playing the animation object if the playing of the animation does not end.

**12.** A system for displaying an animation background, comprising:

a constructing device, configured to construct an animation layer and a application layer, configure an attribute of the application layer as a transparent attribute, and configure a transparent value of the application layer;
an overlaying and displaying device, configured to overlay the animation layer and application layer constructed by the constructing device, and display the overlaid animation layer and application layer on a window; and
an animation playing device, configured obtain, when an audio signal is detected, a first attribute value of an animation object of the current moment, determine a second attribute value and first speed value corresponding the audio signal, take the first attribute value and second attribute value respectively as a starting point and a end point, and play the animation object on the animation layer according to the first speed value, and stop, when the audio signal stops, playing the animation object if the playing of the animation object does not end.

When an audio signal is detected, a first attribute value of an animation object of the current moment is obtained, and a second attribute value and a first speed value corresponding to the audio signal are determined ⟋ 101

The first attribute value and second attribute value are respectively taken as a starting point and end point, and the animation object is played according to the first speed value ⟋ 102

When the audio signal stops, if the playing of the animation object does not end, the playing is stopped ⟋ 103

## Fig. 1

The preset third attribute value and fourth attribute value are respectively taken as the starting point and end point. An animation object is played in a continuous loop according to a preset second speed value — 201

When the audio signal is detected, the loop playback is stopped. The first attribute value of the animation object at a moment that the loop playback is stopped, and the amplitude and frequency of the audio signal is obtained — 202

A second attribute corresponding to the amplitude of the audio signal is determined , and a first speed value corresponding to frequency of the audio signal is determined — 203

The obtained first attribute value and second attribute value are respectively taken as the starting point and end point, and the above animation object is replayed according to the first speed value — 204

When the audio signal stops, it is determined whether the replaying ends — 205

Yes

No

The above loop playback continues — 206

The replaying is stopped and the above loop playback continues — 207

Fig. 2

301

302

| Audio starting animation playing module | → | Audio ending animation playing module |

Fig. 3

303

301

302

| Initial animation playing module | → | Audio starting animation playing module | → | Audio ending animation playing module |

304

305

| Audio changing animation playing module | | Audio lasting animation playing module |

Fig. 4

Fig. 5

An animation layer and application layer are constructed. An attribute of the application layer is configured as a transparent attribute and the transparent value of the application layer is configured ⟍ 601

The animation layer and the application layer are overlaid together, and the overlaid animation layer and application layer is displayed on a window ⟍ 602

The animation is played on the animation layer ⟍ 603

Fig. 6

701

702

703

| Constructing device | → | Overlaying and displaying device | → | Animation playing device |

Fig. 7

# INTERNATIONAL SEARCH REPORT

| | International application No. |
|---|---|
| | PCT/CN2011/072257 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: G06T,H04L,G06F

Documentation searched other than minimum documentation to the extent that such documents are included in the fields searched

Electronic data base consulted during the international search (name of data base and, where practicable, search terms used)

Database: WPI,EPODOC,CNPAT,CNKI
Keywords: TNCT,ANIMATION/CARTOON,PLAY+,AUDIO/VOICE/MUSIC,TRIGGER+/DRIV+,ATTRIBUTE,

SPEED,AMPLITUDE,FREQUENCY,SUPERIMPOS+,TRANSPARENCE

**C. DOCUMENTS CONSIDERED TO BE RELEVANT**

| Category* | Citation of document, with indication, where appropriate, of the relevant passages | Relevant to claim No. |
|---|---|---|
| X | CN101685657A (SHENGYUE INFORMATION TECHNOLOGY SHANGHAI CO LTD) 31 Mar. 2010(31.03.2010) the description page 3 line 5- page 6 line 7 | 1,6 |
| Y | | 11,12 |
| A | | 2-5,7-10 |
| Y | CN101005609A (TENCENT SCI&TECHNOLOGY SHENZHEN CO LTD) 25 Jul. 2007(25.07.2007) the description page 2 lines 12-24 | 11,12 |
| A | | 1-10 |
| A | CN101075349A (ZHUHAI JINSHAN SOFTWARE CO LTD) 21 Nov. 2007(21.11.2007) the whole document | 1-12 |
| A | US2008163074A1 (INT BUSINESS MACHINES CORP) 03 Jul. 2008(03.07.2008) the whole document | 1-12 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 May 2011(31.05.2011) | **23 Jun. 2011 (23.06.2011)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **GUO,Jianchun** Telephone No. (86-10)62412073 |

Form PCT/ISA /210 (second sheet) (July 2009)

## INTERNATIONAL SEARCH REPORT
### Information on patent family members

| International application No. |
|---|
| PCT/CN2011/072257 |

| Patent Documents referred in the Report | Publication Date | Patent Family | Publication Date |
|---|---|---|---|
| CN101685657A | 31.03.2010 | None | |
| CN101005609A | 25.07.2007 | CN101005609B | 03.11.2010 |
| | | RU2008134234A | 27.02.2010 |
| | | RU2387013C1 | 20.04.2010 |
| | | WO2007082485A1 | 26.07.2007 |
| | | IN200801507P3 | 10.10.2008 |
| | | US2008291218A1 | 27.11.2008 |
| CN101075349A | 21.11.2007 | None | |
| US2008163074A1 | 03.07.2008 | TW200828066A | 01.07.2008 |

Form PCT/ISA /210 (patent family annex) (July 2009)

## INTERNATIONAL SEARCH REPORT

| International application No. |
| --- |
| PCT/CN2011/072257 |

Continuation of: the second sheet

**A. CLASSIFICATION OF SUBJECT MATTER**

G06T 13/00 (2006.01) i

H04L 12/58 (2006.01) i

Form PCT/ISA /210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010191031